# EUROPÄISCHE PATENTSCHRIFT

(11) **EP 0 346 529 B1**
(45) Veröffentlichungstag und Bekanntmachung des Hinweises auf die Patenterteilung: **03.03.1993**
(21) Anmeldenummer: 88120783.1
(22) Anmeldetag: 13.12.1988
(51) Int. Cl.: F24D 3/14, F16L 3/04

(54) **Rohranordnung**
Pipe mounting
Fixation de tubes

(30) Priorität: 04.06.1988 DE 3819156
(43) Veröffentlichungstag der Anmeldung: 20.12.1989
(73) Patentinhaber: Wirsbo Pex G.m.b.H., D-63129 Heusenstamm (DE)
(72) Erfinder: Seydel, Achim, D-6113 Babenhausen (DE)
(74) Vertreter: Weisse, Jürgen, Dipl.-Phys. Patentanwalt

(56) Entgegenhaltungen:
- DE-A- 3 125 839
- DE-A- 3 444 533
- US-A- 3 288 136

## Beschreibung

### Technisches Gebiet

Die Erfindung betrifft eine Rohranordnung mit Befestigungsmitteln zur Befestigung eines Rohres an einer Unterlage, bei der die Befestigungsmittel als beim Aufbringen von Druck miteinander verbindbare erste und zweite Haftverbindungsteile ausgebildet sind und ein erstes Haftverbindungsteil an dem Rohr und ein zweites Haftverbindungsteil zur festen Verbindung mit der Unterlage vorgesehen sind.

### Zugrundeliegender Stand der Technik

Befestigungsmittel für Rohre an Unterlagen wie Decken, Wänden oder Böden von Gebäuden, aber auch Metallteilen wie Blechteilen von beispielsweise Automobilen bestehen üblicherweise aus rohrschellenartigen Elementen, die das Rohr aufnehmen und an den jeweiligen Unterlagen in bestimmten Abständen besonders befestigt werden müssen.

Rohranordnungen für Wärmeaustauschzwecke werden zur Heizung oder Kühlung und auch zur Temperierung von Wohnräumen verwendet, können aber auch zur Temperierung technischer Anlagen und allgemein überall dort eingesetzt werden, wo es auf eine Temperierung von Flächen, auch größerer Flächen Wie Sportanlagen, Straßenbrücken und dergleichen ankommt.

Beispielsweise bei einer Fußbodenheizung, die unter Estrich verlegt wird, enthält die vorgenannte Unterlage eine Dämmplatte aus Schaumstoff oder Mineralwolle, die gegebenenfalls einer Stützplatte aufliegt und an den gegenüberliegenden Flachseiten, falls erforderlich, mit Abdichtfolien abgedeckt ist. Diese Dämmplatte dient als Wärme- und Trittschalldämmplatte. Auf dieser Dämmplatte wird beispielsweise eine Baustahlmatte verlegt, die daran durch Trägerelemente abgestützt ist, die zur Aufnahme des Rohres für das Heizmedium ausgebildet sind (DE-A-2 807 446). Nach Verlegung der Rohre und ihrer Anschlußmittel wird die gesamte Anordnung mit Estrich vergossen.

Es sind auch andere Anordnungen dieser Art bekannt geworden, bei denen die Rohranordnung durch Tackern (DE-B-3 125 318) auf der Dämmplatte verlegt wird.

Durch die US-A-3 288 136 ist eine Rohranordnung der eingangs genannten Art zur Verriegelung der Rohre von Kathetern oder Kanülen gegen Längsverschiebung bekannt, bei der das erste Haftverbindungsteil die Verriegelungsvorrichtung und ein durch diese hindurch verlaufendes flexibles Kunststoffrohr umgibt. Das zweite Haftverbindungsteil wird an einer vorgewählten Stelle auf die Haut des Patienten aufgeklebt. Anschließend wird das flexible Kunststoffrohr in die gewünschte Position gebracht und daran das erste Haftverbindungsteil mitsamt der Verriegelungsvorrichtung bis zur Ausrichtung zum zweiten Haftverbindungsteil längsverschoben. Danach wird das erste Haftverbindungsteil durch Niederdrücken mit dem zweiten Haftverbindungsteil verbunden. Gleichzeitig damit werden die Verriegelungsvorrichtung und das flexible Kunststoffrohr so verformt, daß das flexible Kunststoffrohr in der gewünschten Position festgeklemmt und gegen Längsverschiebung gesichert wird.

Es ist auch bekannt, solche Haftverbindungsteile als Haftverschlußteile bei Kleidungsstücken zu verwenden.

Die vorgenannten und viele andere vorbekannte Rohranordnungen besitzen den Nachteil, daß sie spezielle Zwischenglieder zwischen der Unterlage und dem Rohr erfordern, die besonders hergestellt und gegebenenfalls unter Verwendung besonderer Werkzeuge an der Unterlage befestigt oder verlegt werden müssen, um das Rohr in dem jeweils gewünschten Verlauf auf die Unterlage aufzubringen und an jeweils vorbestimmten Stellen mit der Unterlage zu verbinden.

### Offenbarung der Erfindung

Die Aufgabe der vorliegenden Erfindung besteht darin, eine Rohranordnung der vorgenannten Art zu schaffen, bei der das Rohr in einfachster Weise ohne Verwendung besonderer Werkzeuge auf der Oberfläche der Unterlage verlegt und sicher daran befestigt werden kann.

Erfindungsgemäß wird diese Aufgabe dadurch gelöst, daß das erste Haftverbindungsteil unmittelbar und über eine zu verlegende Länge an dem Rohr befestigt ist, das aus einem aus Kunststoff oder Metall gewählten Material gefertigt ist und zur Durchleitung eines Fluids für Temperierzwecke vorgesehen ist, daß das zweite Haftverbindungsteil auf einer vorgegebenen Fläche der Unterlage verteilt ist, die aus Kunststoff und/oder Metall gefertigt ist, und daß die zu verlegende Länge des Rohres mittels des ersten Haftverbindungsteils durch Aufbringen des Drucks unmittelbar mit dem zweiten Haftverbindungsteil mechanisch verbunden und dadurch auf der Unterlage nach einen vorgewählten Verlegungsmuster befestigt ist.

Bei der erfindungsgemäßen Rohranordnung ist das zweite Haftverbindungsteil vorteilhafterweise mit Markierungen zur Anzeige von Befestigungsstellen für das Rohr versehen. Dadurch wird ermöglicht, das mit dem ersten Haftverbindungsteil versehene Rohr unmittelbar durch Andrücken mit der Hand oder dem Fuß an den markierten Stellen fest und sicher, aber gleichzeitig auch lösbar mit der Unterlage bzw. dem zweiten Haftverbindungsteil zu verbinden.

Nach der Erfindung wird somit eine besonders einfache Verlegung von Rohren erreicht, da die Befestigung durch einfache Druckausübung auf das erste Haftverbindungsteil erfolgt. Überraschenderweise ist die so hergestellte Verbindung hinreichend fest und sicher, obwohl zwischen den ersten und zweiten Haftverbindungsteilen nicht die sonst bei Haftverbindungen dieser Art übliche, ausgedehnt flächenhafte gegenseitige Eingriffsverbindung ausgebildet wird, vgl. zum Beispiel DE-C-2 021 074.

### Kurze Beschreibung der Zeichnungen

Nachfolgend werden unter Bezugnahme auf die zugehörigen Zeichnungen Ausführungsbeispiele der erfindungsgemäßen Rohranordnung anhand der Bezugszeichen im einzelnen erläutert und beschrieben. Es zeigen
- Figur 1: eine perspektivische Ansicht eines ersten Ausführungsbeispiels der erfindungsgemäßen Rohranordnung am Beispiel eines Wärmetauschers;
- Figur 2: eine Draufsicht auf ein zweites Ausführungsbeispiel der erfindungsgemäßen Rohranordnung am Beispiel eines Wärmetauschers;
- Figur 3: eine Draufsicht einer ersten Ausführung der Verbindung zwischen einem bandförmigen ersten Haftverbindungsteil und einem Rohr;
- Figur 4: eine Draufsicht einer zweiten Ausführung der Verbindung zwischen einem bandförmigen ersten Haftverbindungsteil und einem Rohr;
- Figur 5: eine Draufsicht einer dritten Ausführung der Verbindung zwischen einem bandförmigen ersten Haftverbindungsteil und einem Rohr;
- Figur 6: eine Draufsicht einer vierten Ausführung der Verbindung zwischen einem bandförmigen ersten Haftverbindungsteil und einem Rohr; und
- Figur 7: eine Schnittansicht einer Ausbildung eines ringförmigen ersten Haftverbindungsteils.

### Bevorzugte Ausführung der Erfindung

Nachfolgend wird eine Rohranordnung 1 unter Bezugnahme auf einen Wärmetauscher beschrieben, bei dem ein Rohr 10 an eine Quelle für einen erwärmten oder abgekühlten Wärmeträger angeschlossen und auf einer Unterlage 2 in Gestalt einer Dämmplatte verlegt ist. Die Rohranordnung 1 kann jedoch in entsprechender Weise in Verbindung mit einer anderen Unterlage verwirklicht werden, die beispielsweise die Decke, die Wand oder der Boden in einem Gebäude, aber auch jede andere tragende Unterlage für das zu verlegende Rohr 10 sein kann, wofür lediglich beispielshaft Metallwände von Apparaturen, Blechteile von Automobilen und dergleichen genannt sein sollen. In allen solchen Fällen dienen Haftverbindungen nach Art der Haftverbindungen 3 und 3A zur raschen und sicheren, lösbaren Verlegung der jeweiligen Rohre 10. Zweckmäßigerweise ist dabei die jeweilige Unterlage 2 mit einem zweiten Haftverbindungsteil in Form eines Schlingenteils 30 ganz oder teilweise beschichtet, an dem das Rohr 10, das in einer der nachstehend beschriebenen Weisen mit einem ersten Haftverbindungsteil in Form eines Hakenteils verbunden ist, durch den gegenseitigen Eingriff zwischen den ersten und zweiten Haftverbindungsteilen gehaltert wird. Gegebenenfalls kann aber auch die Unterlage 2 mit dem Hakenteil und das Rohr 10 mit dem Schlingenteil 30 versehen sein.

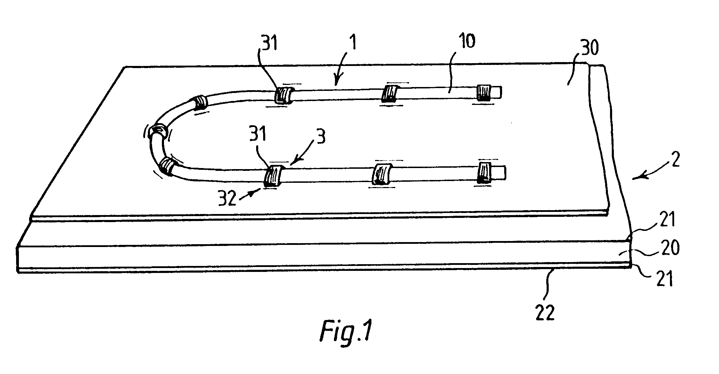

Figur 1 zeigt als erstes Ausführungsbeispiel eine Wärmetauscheranordnung zu Temperierzwecken, d.h. zur Heizung oder Kühlung eines Raumes in Verbindung mit einer Wand, dem Boden oder der Decke des Raumes oder einer technischen oder sonstigen Ablage durch einen Wärmeträger, der von einer Wärme- oder Kältequelle kommend im Umlauf durch die Rohranordnung 1 geleitet oder umgewälzt wird.

Die Rohranordnung 1 ist an einer Unterlage 2 in Form einer Dämmplatte mittels einer handelsüblichen Haftverbindung 3 befestigt. Sie enthält in dem dargestellten Ausführungsbeispiel ein mäanderförmig, schneckenförmig oder anderweitig verlegtes Rohr 10 aus vernetztem Polyethylen, das aber auch aus anderen Kunststoffen oder Metall gefertigt sein kann; nur ein U-Bogen des mäanderförmig verlegten Rohres 10 ist in Figur 1 dargestellt.

Die Dämmplatte besteht in dem dargestellten Ausführungsbeispiel in konventioneller Weise aus einem Schaumstoff 20, der beispielsweise offenporig sein kann wie Polyurethanschaumstoff und an der oberen und unteren Flachseite mit einer Abdichtfolie oder Abdeckung 21 beispielsweise aus einem Metall wie Aluminium oder einem Metallblech wie Aluminiumblech abgedichtet ist. Stattdessen kann auch eine Mineralwolleplatte oder ein geschlossenporiger Schaumstoff wie Polystyrol verwendet werden. Im letzteren Fall können die Abdichtfolien 21 weggelassen werden.

Der Schaumstoff 20 bzw. die untere Abdichtfolie 21 sind mit einer Stützplatte 22 unterlegt und damit beispielsweise durch einen Kleber fest verbunden.

Die Haftverbindung 3 enthält den Schlingenteil 30, der die gesamte, der Stützplatte 22 abgekehrte Oberfläche oder einen ausgewählten Teil dieser Oberfläche des Schaumstoffes 20 bzw. der oberen Abdichtfolie 21 abdeckt. Dieser Schlingenteil 30 besteht aus einem gewebten oder flauschartigen Material, mit dem der Hakenteil der Haftverbindung fest, aber lösbar verbindbar ist.

Der Schlingenteil 30 ist mit dem Schaumstoff 20 bzw. der Abdichtfolie 21 durch Kleben verbunden. Falls dazu ein wasserdichter Kleber verwendet wird, kann auf die Abdichtfolie 21 verzichtet werden. Gegebenenfalls kann anstelle der Klebverbindung auch eine Haftverbindung gewählt werden; dafür werden die jeweils gegenüberliegenden Flächen mit Schlingenteilen und Hakenteilen belegt.

Bei dem dargestellten Ausführungsbeispiel wird der erste Haftverbindungsteil 31 in Form eines Hakenteils aus einer Mehrzahl von ringförmigen Haftgliedern gebildet, die in vorgegebenen Abständen an dem Rohr 10 so angeordnet sind, daß die Hakenelemente der Haftglieder nach außen, d.h. gegen den Schlingenteil 30 vorstehen. Die ringförmigen Haftglieder können auf dem Rohr 10 frei verschieblich, aber auch unverschiebbar angeordnet sein.

In der einfachsten Ausführung sind die ringförmigen Haftglieder an vorbestimmten Stellen an das Rohr 10 angeklebt, wobei die Klebung durch einen Kalt- oder Heißkleber, aber auch durch einen Mehrkomponentenkleber ganzflächig oder punktuell bewirkt werden kann. Die Verbindung zwischen den ringförmigen Haftgliedern und dem Rohr 10 kann auch durch Schweißen, z.B. Ultraschallschweißen, Laserschweißen und dergleichen unter Zwischenlage eines geeignetes Materials oder Formteils hergestellt werden, sowie durch Spritzgießen thermoplastischer Kunststoffe,die den Zwischenraum zwischen dem ringförmigen Haftglied und dem Rohr 10 ausfüllen.

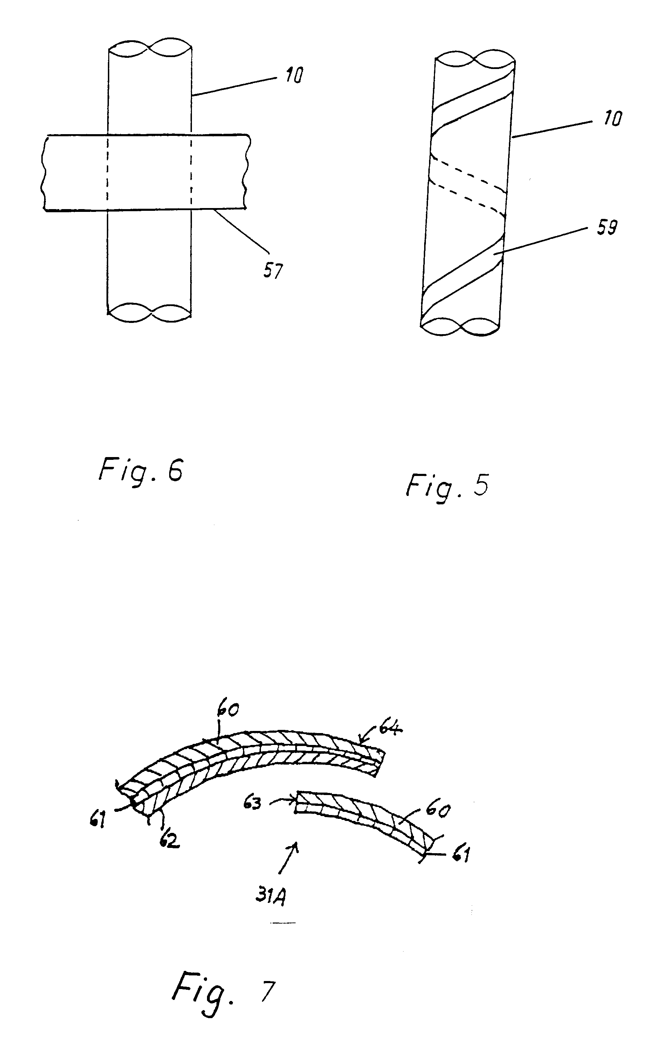

Eine besondere Ausführung eines ringförmig ausgebildeten Haftgliedes des Haftverbindungsteils 31A zeigt Figur 7 in Schnittansicht vor dem Ringschluß. Die Abbildung zeigt ein bandförmiges Haftglied mit überlappend angeordneten Enden 63 und 64. Das Ende 63 enthält einen Hakenteil 60, der in üblicher Weise an seiner Rückseite mit einem Gewebeband 61 versehen ist. Das andere Ende 64 enthält zusätzlich einen Schlingenteil 62, der in üblicher Weise mit dem Gewebeband 61 versehen ist. Der Hakenteil 60 und der Schlingenteil 62 sind an dem Ende 64 Rücken an Rücken angeordnet.

Die Enden 63 und 64 können so durch Haftschluß zu einem Ring geschlossen werden, der das Rohr 10 an einer vorgegebenen Stelle umschließt, ohne fest damit verbunden zu sein. Das ringförmige Haftglied kann aber auch vor der Haftverbindung festgezogen werden, so daß das ringförmig ausgebildete Haftglied an der vorgegebenen Stelle fest auf das Rohr 10 aufgespannt wird.

Der Schlingenteil des zweiten Haftverbindungsteils 30 ist zweckmäßigerweise an vorgegebenen Stellen mit Markierungen 32 versehen, die in Figur 1 nur angedeutet sind. Solche Markierungen 32 können in beliebiger Weise als Farbmarkierungen, Gewebemarkierungen oder dergleichen ausgebildet sein. Die Markierungen 32 ermöglichen die Positionierung des Rohres 10 bzw. der mit dem Rohr 10 verbundenen Haftglieder des ersten Haftverbindungsteils 31 an dem Schlingenteil des zweiten Haftverbindungsteils 30 in der Weise, daß der jeweils gewünschte Verlauf der Rohranordnung 1 erhalten wird.

Die eigentliche Verlegung des Rohres 10 erfolgt auf dem Schlingenteil des zweiten Haftverbindungsteils 30 auf der die Unterlage 2 bildenden Dämmplatte durch Andrücken der Haftglieder des ersten Haftverbindungsteils 31 an den Schlingenteil des zweiten Haftverbindungsteils 30 an den Stellen der Markierungen 32. Das Andrücken erfolgt in einfachster Weise mit der Hand oder mit dem Fuß und führt zu einer festen und sicheren Verbindung zwischen der Rohranordnung 1 und der Unterlage 2, die durch die nachfolgenden Arbeitsgänge und den späteren Betrieb der Wärmetauscheranordnung nicht beeinflußt wird. Trotzdem ist die Verbindung leicht lösbar, so daß während der Verlegung ohne weiteres, falls erforderlich, Korrekturen an dem Verlegungsmuster vorgenommen werden können.

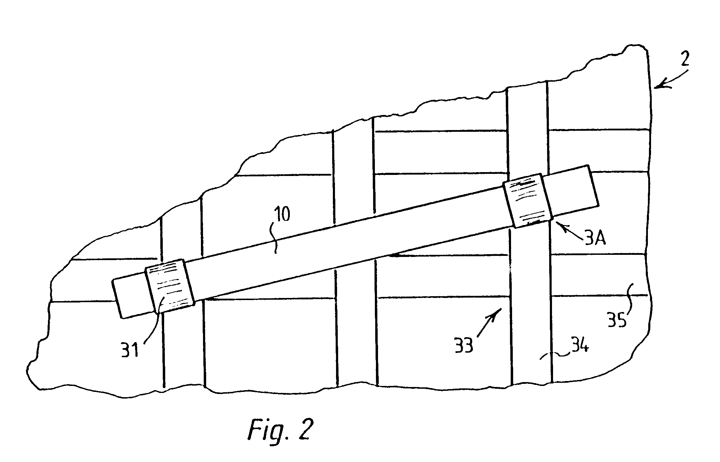

Das in Figur 2 in Draufsicht dargestellte zweite Ausführungsbeispiel der Rohranordnung 1 enthält eine die Unterlage 2 bildende Dämmplatte von der Art, wie sie vorstehend im Zusammenhang mit Figur 1 beschrieben wurde.

Auf der der Stützplatte 22 abgewandten oberen Flachseite ist die Dämmplatte mit einem Raster 33 von zueinander senkrechten Streifen 34 und 35 des Schlingenteils eines zweiten Haftverbindungsteils versehen. Die Streifen 34 und 35 sind fest, zum Beispiel durch Kleben mit der Oberfläche der die Unterlage 2 bildenden Dämmplatte verbunden. Ein Rohr 10 von der Art, wie es vorstehend im Zusammenhang mit Figur 1 beschrieben wurde, ist in der dort beschriebenen Weise mit den ringförmigen Haftgliedern des ersten Haftverbindungsteils 31 der Haftverbindung 3A versehen und wird auch in der dort beschriebenen Weise mit den Streifen 34 und 35 des Rasters 33 fest, aber lösbar verbunden. Die das Raster 33 bildenden Streifen 34 und 35 des Schlingenteils müssen nicht senkrecht zueinander verlaufen, sondern können in jeder beliebigen, für den jeweiligen Anwendungszweck optimalen Weise auf der Oberfläche der Unterlage 2 verlegt werden, zum Beispiel auch in diagonalen Richtungen, mäanderartig, unter einem Winkel zueinander und dergleichen.

Bei einer weiteren, in Figur 6 dargestellten Ausführung des Rohres 10 verlaufen bandförmige erste Haftverbindungsteile 57 quer zur Längsrichtung des Rohres 10 und sind übergreifend daran befestigt, so daß die seitlich überstehenden Enden der bandförmigen ersten Haftverbindungsteile 57 mit den das Raster 33 bildenden Streifen 34 oder 35 oder einem flächig verlegten Schlingenteil des zweiten Haftverbindungsteils 30 zur Halterung des Rohres 10 in Eingriffsverbindung kommen.

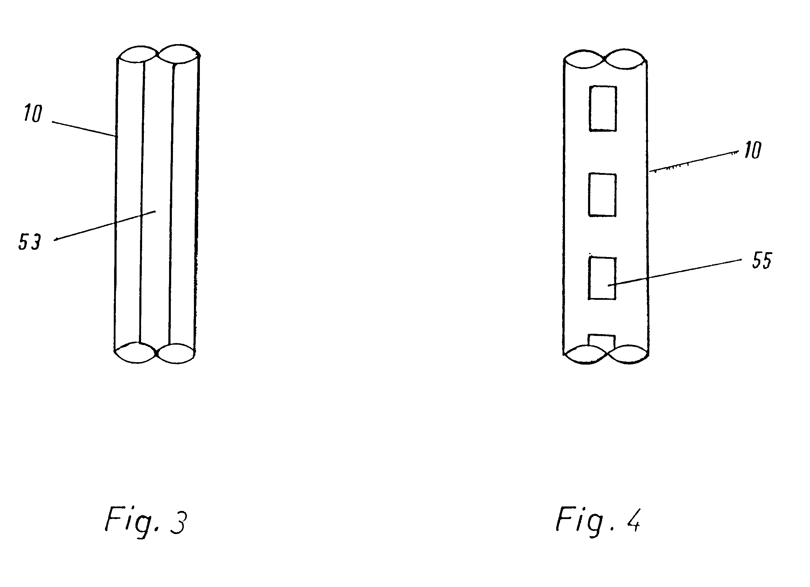

Figuren 3 bis 5 zeigen weitere Ausführungen von bandförmigen ersten Haftverbindungsteilen 53, 55 und 59, die mit einen Rohr 10 der vorgenannten Art verbunden sind und beim Eingriff mit einem in Streifen 34 und/oder 35 oder einem flächig verlegten zweiten Haftverbindungsteil 30 das Rohr 10 fest, aber lösbar an der jeweiligen Unterlage 2 haltern. Dabei sind die bandförmigen ersten Haftverbindungsteile 53, 55 und 59 an dem Rohr 10 nach einer der Verbindungsarten angebracht, wie sie vorstehend im Zusammenhang mit Figur 1 beschrieben worden sind.

In der Ausführung nach Figur 3 ist der bandförmige erste Haftverbindungsteil 53 in Längsrichtung mit dem Rohr 10 verbunden; bei der in Figur 4 dargestellten Modifikation ist das in Längsrichtung am Rohr 10 angebrachte bandförmige erste Haftverbindungsteil 55 quer unterteilt und bildet eine Mehrzehl von streifenförmigen Haftgliedern, die im Abstand zueinander längs an dem Rohr 10 angeordnet sind. In der Ausführung nach Figur 5 ist das bandförmige erste Haftverbindungsteil 59 schraubenförmig um das Rohr 10 gewickelt. Dabei ist die Zahl der Verbindungsstellen über eine vorgegebene Länge des Rohres 10 abhängig von der Ganghöhe der schraubenförmigen Wicklung. Auch bei dieser Ausführung kann das bandförmige erste Haftverbindungsteil 59 quer zur Längsrichtung in eine Mehrzahl von streifenförmigen Haftgliedern unterteilt sein, die im Abstand zueinander an dem Rohr 10 angeordnet sind.

## Patentansprüche

1. Rohranordnung mit Befestigungsmitteln zur Befestigung eines Rohres (10) an einer Unterlage (2), bei der die Befestigungsmittel als beim Aufbringen von Druck miteinander verbindbare erste und zweite Haftverbindungsteile ausgebildet sind und ein erstes Haftverbindungsteil an dem Rohr (10) und ein zweites Haftverbindungsteil zur festen Verbindung mit der Unterlage (2) vorgesehen sind,
dadurch gekennzeichnet, daß das erste Haftverbindungsteil (31, 31A, 53, 55, 57, 59) unmittelbar und über eine zu verlegende Länge an dem Rohr (10) befestigt ist, das aus einem aus Kunststoff oder Metall gewählten Material gefertigt ist und zur Durchleitung eines Fluids für Temperierzwecke vorgesehen ist, daß das zweite Haftverbindungsteil (30; 34, 35) auf einer vorgegebenen Fläche der Unterlage (2) verteilt ist, die aus Kunststoff und/oder Metall gefertigt ist, und daß die zu verlegende Länge des Rohres (10) mittels des ersten Haftverbindungsteils durch Aufbringen des Drucks unmittelbar mit dem zweiten Haftverbindungsteil mechanisch verbunden und dadurch auf der Unterlage nach einem vorgewählten Verlegungsmuster befestigt ist.

2. Rohranordnung nach Anspruch 1, dadurch gekennzeichnet, daß das zweite Haftverbindungsteil (30; 34, 35) auf die vorgegebene, das Rohr (10) tragende Fläche der Unterlage (2) aufgeklebt ist.

3. Rohranordnung nach Anspruch 2, dadurch gekennzeichnet, daß das zweite Haftverbindungsteil (30) die gesamte vorgegebene, das Rohr (10) tragende Fläche der Unterlage (2) bedeckt.

4. Rohranordnung nach Anspruch 2, dadurch gekennzeichnet, daß das zweite Haftverbindungsteil (34, 35) nach einem vorgewählten Muster über die vorgegebene, das Rohr (10) tragende Fläche der Unterlage (2) verteilt ist.

5. Rohranordnung nach einem der Ansprüche 2 bis 4, dadurch gekennzeichnet, daß das zweite Haftverbindungsteil (30; 34, 35) Markierungen (32) zur Anzeige von Befestigungsstellen für das Rohr (10) aufweist.

6. Rohranordnung nach einem der Ansprüche 1 bis 5, dadurch gekennzeichnet, daß das erste Haftverbindungsteil (53, 55, 57, 59) bandförmig ausgebildet ist.

7. Rohranordnung nach Anspruch 6, dadurch gekennzeichnet, daß das bandförmige erste Haftverbindungsteil (53, 55) in Längsrichtung an dem Rohr (10) angeordnet ist.

8. Rohranordnung nach Anspruch 7, dadurch gekennzeichnet, daß das bandförmige erste Haftverbindungsteil (59) schraubenförmig an dem Rohr (10) angeordnet ist.

9. Rohranordnung nach Anspruch 7 oder 8, dadurch gekennzeichnet, daß das bandförmige erste Haftverbindungsteil eine Mehrzahl von im Abstand zueinander angeordneten streifenförmigen Haftgliedern (55) bildet.

10. Rohranordnung nach Anspruch 9, dadurch gekennzeichnet, daß das bandförmige erste Haftverbindungsteil (57) quer zu dem Rohr (10) verläuft und auf gegenüberliegenden Seiten des Rohres (10) an dem zweiten Haftverbindungsteil (30; 34, 35) befestigt ist.

11. Rohranordnung nach Anspruch 10, dadurch gekennzeichnet, daß das bandförmige erste Haftverbindungsteil (31, 31A) zum Ring um das Rohr (10) geschlossen ist und eine Mehrzahl von ringförmigen Haftgliedern bildet, die über die zu verlegende Länge des Rohres (10) verteilt sind.

12. Rohranordnung nach einem der Ansprüche 7 bis 11, dadurch gekennzeichnet, daß das erste Haftverbindungsteil (31, 53, 55, 57, 59) durch einen Kaltkleber oder Heißkleber mit dem Rohr (10) verbunden ist.

13. Rohranordnung nach einem der Ansprüche 7 bis 11, dadurch gekennzeichnet, daß das erste Haftverbindungsteil (31, 53, 55, 57, 59) mit dem Rohr (10) durch Schweißen verbunden ist.

14. Rohranordnung nach Anspruch 11, dadurch gekennzeichnet, daß jedes ringförmige Haftglied durch überlappende Haftverbindung eines Hakenteils (60) an einem Ende (63) mit einen Schlingenteil (62) an der Rückseite des anderen Endes (64) zum Ring geschlossen ist.

15. Rohranordnung nach einem der Ansprüche 1 bis 15, dadurch gekennzeichnet, daß das Rohr (10) an eine Wärme- oder Kältequelle anschließbar und das Fluid ein Wärmeüberträger ist, und daß die Unterlage (2) eine Dämmplatte mindestens zur Wärmedämmung bildet.

16. Rohranordnung nach Anspruch 15, dadurch gekennzeichnet, daß das zweite Haftverbindungsteil (30) mit einem wasserdichten Kleber auf die Dämmplatte aufgeklebt ist.

17. Rohranordnung nach Anspruch 16, dadurch gekennzeichnet, daß das zweite Haftverbindungsteil (30) auf eine Aluminiumfolie oder ein Aluminiumblech geklebt ist, die als Abdeckung (21) auf die Dämmplatte aufgeklebt ist.

18. Rohranordnung nach einem der vorstehenden Ansprüche, dadurch gekennzeichnet, daß das Rohr (10) aus thermoelastischem vernetzten Polyolefin gebildet ist.

19. Rohranordnung nach einem der Ansprüche 1 bis 18, dadurch gekennzeichnet, daß das erste Haftverbindungsteil (31, 31A, 53, 55, 57, 59) an dem Rohr (10) als Hakenteil und das zweite Haftverbindungsteil (30;, 34, 35) an der Unterlage (2) als Schlingenteil ausgebildet ist.

20. Verwendung einer Haftverbindung aus einem als Hakenteil ausgebildeten ersten Haftverbindungsteil, das über eine zu verlegende Länge an einem Rohr für die Durchleitung von Fluiden für Temperierzwecke angeordnet ist und durch Andrücken mit einem zweiten Haftverbindungsteil verbindbar ist, das auf einer vorgegebenen, das Rohr tragenden Fläche einer Unterlage verteilt ist, zur Herstellung einer Rohranordnung nach einem der Ansprüche 1 bis 19.

21. Verwendung einer Haftverbindung nach Anspruch 20 zur Herstellung einer Rohranordnung nach einem der Ansprüche 1 bis 19 auf einer wärmedämmenden Unterlage.

22. Verwendung einer Haftverbindung nach Anspruch 21 zur Herstellung einer Fußbodenheizung mit einer Rohranordnung nach einem der Ansprüche 1 bis 19 auf einer die Unterlage bildenden Dämmplatte.

## Claims

1. Tubing arrangement containing mounting means for mounting a tube (10) at a base (2) and in which tubing arrangement the mounting means comprise first and second adhering connection parts interconnectable by the application of pressure, a first adhering connection part at the tube (10) and a second adhering connection part being provided for fixed connection to the base (2),
characterised in that the first adhering connection part (31,31A,53,55,57,59) is mounted immediately at the tube (10) along a length of the tube to be laid, said tube being made of a material selected from plastic or metal and provided for throughpassing a fluid for temperature conditioning purposes, that the second adhering connection part (30;34,35) is distributed across a predetermined area of the base (2) which is made of plastic and/or metal, and that the length of the tube (10) to be laid is immediately mechanically connected to the second adhering connection part by means of the first adhering connection part through the application of pressure and thereby secured to the base according to a preselected laying pattern.

2. Tubing arrangement according to claim 1, characterised in that the second adhering connection part (30;34,35) is adhesively bonded to the predetermined tube (10) supporting area of the base (2).

3. Tubing arrangement according to claim 2, characterised in that the second adhering connection part (30) covers the entire predetermined tube (10) supporting surface area of the base (2).

4. Tubing arrangement according to claim 2, characterised in that the second adhering connection part (34,35) is distributed across the predetermined tube (10) supporting area of the base (2) according to a preselected pattern.

5. Tubing arrangement according any one of claims 2 to 4, characterised in that the second adhering connection part (30;34,35) comprises markings (32) for indicating mounting locations for the tube (10).

6. Tubing arrangement according to any one of claims 1 to 5, characterised in that the first adhering connection part (53,55,57,59) is designed in the shape of a band.

7. Tubing arrangement according to claim 6, characterised in that the band-shaped first adhering connection part (53,55) is longitudinally arranged at the tube (10).

8. Tubing arrangement according to claim 7, characterised in that the band-shaped first adhering connection part (59) is helically arranged at the tube (10).

9. Tubing arrangement according to claim 7 or 8, characterised in that the band-shaped first adhering connection part forms a plurality of mutually spaced strip-shaped adhering members (55).

10. Tubing arrangement according to claim 9, characterised in that the band-shaped first adhering connection part (57) extends transversely to the tube (10) and is mounted at the second adhering connection part (30;34,35) on opposite sides of the tube (10).

11. Tubing arrangement according to claim 10, characterised in that the band-shaped first adhering connection part (31,31A) is closed to form a ring extending around the tube (10) and forms a multitude of ring-shaped adhering memebers which are distributed along the length of the tube (10) to be laid.

12. Tubing arrangement according to any one of claims 7 to 11, characterised in that the first adhering connection part (31,53,55,57,59) is connected to the tube (10) by means of a cold-setting or heat-setting adhesive.

13. Tubing arrangement according to any one of claims 7 to 11, characterised in that the first adhering connection member (31,53,55,57,59) is connected to the tube (10) by means of welding.

14. Tubing arrangement according to claim 11, characterised in that each one of the ring-shaped adhering members is formed to the closed ring by an overlapping adhering connection of a hook-containing member (60) provided at one end (63) and a loop-containing member (62) formed on the reverse side of the other end (64).

15. Tubing arrangement according to any one of claims 1 to 15, characterised in that the tube (10) is adapted to be connected to a heat source or cold source and the fluid constitutes a heat transfer medium, and that the base (2) is an insulating plate at least for heat insulation.

16. Tubing arrangement according to claim 15, characterised in that the second adhering connection part (30) is ahesively bonded to the insulating plate by means of a water-proof adhesive.

17. Tubing arrangement according to claim 16, characterised in that the second adhering connection part (30) is adhesively bonded to an aluminum foil or aluminum sheet adhesively bonded to the insulating plate as a cover (21).

18. Tubing arrangement according to any one of the preceding claims, characterised in that the tube (10) is made of a thermoelastic, cross-linked polyolefin.

19. Tubing arrangement according to any one of claims 1 to 18, characterised in that the first adhering connection part (31,31A,53,55,57,59) mounted at the tube (10) is constructed as a hook-containing part and the second adhering connection part (30;34,35) mounted at the base (2) is constructed as a loop-containing part.

20. Method of using an adhering connection formed by a first adhering connection part which is constructed as a hook-containing part and arranged at a tube along a length thereof adapted to be laid and provided for throughpassing fluids for temperature conditioning purposes, said first adhering connection part being connectable to a second adhering connection part by pressing thereagainst, said second adhering connection part being distributed across a predetermined tube supporting area of a base, for producing a tubing arrangement according to any one of claims 1 to 19.

21. Method of using an adhering connection according to claim 20 for producing a tubing arrangement according to any one of claims 1 to 19 on a heat insulating base.

22. Method of using an adhering connection according to claim 21 for producing a floor heating containing a tubing arrangement according to any one of claims 1 to 19 on an insulating plate forming the base.

## Revendications

1. Disposition de tuyau munie de moyens de fixation destinés à fixer un tuyau (10) à une base (2), dans laquelle les moyens de fixation sont formés comme premiers et seconds éléments de connexion adhésive reliables lors de l'application de pression, et un premier élément de connexion adhésive au tuyau (10) et un second élément de connexion adhésive sont prévus pour la connexion fixe avec la base (2),
caractérisée par le fait que le premier élément de connexion adhésive (31, 31A, 53, 55, 57, 59) est monté directement et sur une longueur à poser au tuyau (10) fabriqué d'une matière choisie de matière plastique ou de métal et prévu afin de faire passer un fluide à des fins de températion, que le second élément de connexion adhésive (30; 34, 35) est réparti sur une surface prédéterminée de la base (2) fabriquée de matière plastique et/ou de métal, et que la longueur de tuyau (10) à poser est directement reliée mécaniquement au second élément de connexion adhésive au moyen du premier élément de connexion adhésive en mettant la pression, et par cela elle est fixée sur la base selon un dessin de pose préchoisi.

2. Disposition de tuyau selon la revendication 1, caractérisé par le fait que le second élément de connexion adhésive (30; 34, 35) est collé sur la surface prédéterminée de la base (2) portant le tuyau (10).

3. Disposition de tuyau selon la revendication 2, caractérisée par le fait que le second élément de connexion adhésive (30) couvre toute la surface prédéterminée de la base (2) portant le tuyau (10).

4. Disposition de tuyau selon la revendication 2, caractérisée par le fait que le second élément de connexion adhésive (34, 35) est réparti selon un dessin préchoisi sur la surface prédéterminée de la base (2) portant le tuyau (10).

5. Disposition de tuyau selon l'une des revendications 2 à 4, caractérisée par le fait que le second élément de connexion adhésive (30; 34, 35) présente des repères (32) destinés à l'indication d'endroits de fixation pour le tuyau (10).

6. Disposition de tuyau selon l'une des revendications 1 à 5, caractérisée par le fait que le premier élément de connexion adhésive (53, 55, 57, 59) a une forme de bande.

7. Disposition de tuyau selon la revendication 6, caractérisée par le fait que le premier élément de connexion adhésive en forme de bande (59) est disposé dans la direction longitudinale sur le tuyau (10).

8. Disposition de tuyau selon la revendication 7, caractérisée par le fait que le premier élément de connexion adhésive en forme de bande (59) est disposé en forme d'hélice sur le tuyau (10).

9. Disposition de tuyau selon la revendication 7 ou 8, caractérisée par le fait que le premier élément de connexion adhésive en forme de bande forme plusieurs membres adhésifs (55) en forme de bandes écartés.

10. Disposition de tuyau selon la revendication 9, caractérisée par le fait que le premier élément de connexion adhésive en forme de bande (57) s'étend transversalement au tuyau (10) et est fixé sur des côtés opposés du tuyau (10) sur le second élément de connexion adhésive (30; 34, 35).

11. Disposition de tuyau selon la revendication 10, caractérisée par le fait que le premier élément de connexion adhésive en forme de bande (31, 31A) est fermée de sorte à former un anneau autour du tuyau (10), et forme plusieurs membres adhésifs annulaires répartis sur la longueur du tuyau (10) à poser.

12. Disposition de tuyau selon l'une des revendications 7 à 11, caractérisée par le fait que le premier élément de connexion adhésive (31, 53, 55, 57, 59) est relié par une colle à froid ou à chaud au tuyau (10).

13. Disposition de tuyau selon l'une des revendications 7 à 11, caractérisée par le fait que le premier élément de connexion adhésive (31, 53, 55, 57, 59) est relié au tuyau (10) par soudage.

14. Disposition de tuyau selon la revendication 11, caractérisée par le fait que chaque membre adhésif annulaire est fermé par une connexion adhésive chevauchant à un élément de crochet (60) à une extrémité avec un élément de lacet (62) sur le dos de l'autre extrémité (64) de sorte à former un anneau.

15. Disposition de tuyau selon l'une des revendications 1 à 15, caractérisée par le fait que le tuyau (10) peut être raccordé à une source de chaleur ou de froid, et le fluide est un caloporteur, et que la base (2) forme une plaque d'isolation au moins pour l'isolation thermique.

16. Disposition de tuyau selon la revendication 15, caractérisée par le fait que le second élément de connexion adhésive (30) est collé sur la plaque d'isolation avec une colle résistant à l'eau.

17. Disposition de tuyau selon la revendication 16, caractérisée par le fait que le second élément de connexion adhésive (30) est collé sur une feuille d'aluminium ou une tôle d'aluminium collée comme couverture (21) sur la plaque d'isolation.

18. Disposition de tuyau selon l'une des revendications ci-dessus, caractérisée par le fait que le tuyau (10) est formé de polyoléfine réticulée thermoélastique.

19. Disposition de tuyau selon l'une des revendications 1 à 18, caractérisée par le fait que le premier élément de connexion adhésive (31, 31A, 53, 55, 57, 59) est formé au tuyau (10) comme élément de crochet et le second élément de connexion adhésive (30; 34, 35) à la base (2) comme élément de lacet.

20. Utilisation d'une connexion adhésive d'un premier élément de connexion adhésive formé comme élément de crochet et disposé sur une longueur à poser sur un tuyau destiné à faire passer des fluides à des fins de températion, et reliable par mise en contact par pression à un second élément de connexion adhésive réparti sur une surface prédéterminée d'une base portant le tuyau, afin de prévoir une disposition de tuyau selon l'une des revendications 1 à 19.

21. Utilisation d'une connexion adhésive selon la revendication 20 afin de prévoir une disposition de tuyau selon l'une des revendications 1 à 19 sur une base d'isolation thermique.

22. Utilisation d'une connexion adhésive selon la revendication 21 afin de prévoir un chauffage du sol avec une disposition de tuyau selon l'une des revendications 1 à 19 sur une plaque d'isolation formant la base.
